(19) Europäisches Patentamt
European Patent Office
Office européen des brevets

(11) **EP 1 637 902 B1**

(12) **EUROPÄISCHE PATENTSCHRIFT**

(45) Veröffentlichungstag und Bekanntmachung des Hinweises auf die Patenterteilung:
**16.01.2008 Patentblatt 2008/03**

(51) Int Cl.:
*G01S 13/90* (2006.01)      *G01S 13/00* (2006.01)
*G01S 7/40* (2006.01)

(21) Anmeldenummer: **05018970.3**

(22) Anmeldetag: **01.09.2005**

(54) **Verfahren und Vorrichtung zur interferometrischen Radarmessung**

Method and device for interferometric radar measurement

Système et dispositif de mesure radar interférometrique

(84) Benannte Vertragsstaaten:
**DE FR GB IT**

(30) Priorität: **21.09.2004 DE 102004046041**

(43) Veröffentlichungstag der Anmeldung:
**22.03.2006 Patentblatt 2006/12**

(73) Patentinhaber: **Astrium GmbH**
**81663 München (DE)**

(72) Erfinder: **Völker, Michael**
**88090 Immenstaad (DE)**

(74) Vertreter: **Hummel, Adam et al**
**EADS Deutschland GmbH**
**Patentabteilung**
**81663 München (DE)**

(56) Entgegenhaltungen:
**EP-A- 1 426 785      US-A1- 2004 145 514**

• **EINEDER M ED - INSTITUTE OF ELECTRICAL AND ELECTRONICS ENGINEERS: "Ocillator clock drift compensation in bistatic interferometric SAR" IGARSS 2003. IEEE 2003 INTERNATIONAL GEOSCIENCE AND REMOTE SENSING SYMPOSIUM. PROCEEDINGS. TOULOUSE, FRANCE, JULY 21 - 25, 2003, IEEE INTERNATIONAL GEOSCIENCE AND REMOTE SENSING SYMPOSIUM, NEW YORK, NY : IEEE, US, Bd. VOL 7 OF 7, 21. Juli 2003 (2003-07-21), Seiten 1449-1451, XP010704770 ISBN: 0-7803-7929-2**
• **MARTIN-NEIRA M ET AL: "STUDY OF A CONSTELLATION OF BISTATIC RADAR ALTIMETERS FOR MESOSCALE OCEAN APPLICATIONS" IEEE TRANSACTIONS ON GEOSCIENCE AND REMOTE SENSING, IEEE INC. NEW YORK, US, Bd. 36, Nr. 6, November 1998 (1998-11), Seiten 1898-1904, XP000802708 ISSN: 0196-2892**

EP 1 637 902 B1

**EP 1 637 902 B1**

**Beschreibung**

Die Erfindung betrifft ein Verfahren zur interferometrischen Radarmessung gemäß dem Oberbegriff von Anspruch 1 und eine entsprechende Vorrichtung gemäß Anspruch 8.

Bei Synthetik-Apertur-Radar (SAR)-Systemen ist eine hochgenaue Zeitreferenz für exakte Messergebnisse von wesentlicher Bedeutung. Werden mehrere SAR-Systeme, beispielsweise auf unterschiedlichen Satelliten, eingesetzt, ist zudem ein Abgleich der einzelnen Zeitreferenzen der SAR-Systeme untereinander für eine exakte Radarmessung wichtig.

EP 1 426 785 offenbart ein Verfahren zur Kompensation von Phasenfehlern eines SAR. Die Echosignale und die Differenzfrequenzsignale werden zu einer Boden-Auswertstation übertragen um ein Phasenfehlersignal zu ergeben.

Aus der EP 1 065 518 ist ein Radarsystem mit einer Anzahl von SAR-Systemen auf satelliten- oder flugkörpergestützten Trägerplattformen bekannt. Um eine Drift der internen Oszillatoren der SAR-Systeme, die als Zeitreferenz dienen, zu vermeiden, wird in der EP 1 065 518 eine Mikrowellen- oder Laserverbindung zwischen den einzelnen SAR-Systemen eingesetzt, um eine Oszillatorfrequenz von einem Hauptoszillator zu den übrigen Oszillatoren zu übertragen und diese damit zu synchronisieren.

In dem Aufsatz "Oscillator Clock Drift Compensation in Bistatic Interferometric SAR", M. Eineder, IGARSS 2003, Toulouse, IEEE Proceedings of IGARSS'03, ist die Kompensation der Drift von Zeitreferenzen bei SAR-Systemen beschrieben. Dabei werden Sender und Empfänger der Radarsignale räumlich getrennt angeordnet. Die Oszillatorfrequenz wird über eine Inter-Satelliten-Verbindung zwischen den Empfangssatelliten ausgetauscht, um eine Synchronisation der Zeitreferenzen zu erreichen.

Eine Driftkompensation bei derartigen Systemen erfordert zusätzliche Inter-Satelliten-Verbindungen, über die eine Übertragung der Oszillatorfrequenz erfolgen muss. Weitere messrelevante Parameter können mit diesem Verfahren nicht bestimmt werden. Andere Kompensationsverfahren erfordern zusätzliche Komponenten zur Implementierung von Kontrollmechanismen. Der Einsatz dieser Kontrollmechanismen benötigt jedoch Zeit, die bei der eigentlichen Radarmessung verloren geht. Deshalb bleibt die Abtastung zur Referenzierung auf wenige Hertz beschränkt.

Aufgabe der vorliegenden Erfindung ist es daher, ein Verfahren und eine Vorrichtung zur interferometrischen Radarmessung vorzuschlagen, die eine Driftkompensation bei Radarmessungen mit Hilfe der SAR-Interferometrie ohne Einsatz von aufwendigen Inter-Satelliten-Verbindungen ermöglicht.

Diese Aufgabe wird durch ein Verfahren zur interferometrischen Radarmessung mit den Merkmalen von Anspruch 1 und durch eine entsprechende Vorrichtung mit den Merkmalen von Anspruch 8 gelöst. Bevorzugte Ausgestaltungen der Erfindung ergeben sich aus den abhängigen Ansprüchen.

Ein wesentlicher Gedanke der Erfindung besteht darin, dass beim Einsatz mehrerer SAR-Systeme jedes der SAR-Systeme die von den anderen SAR-Systeme gesendeten und am Boden reflektierten Radarsignale empfängt. Die durch die Überlappung der verschiedenen Spektralbereiche der empfangenen Radarsignale entstehenden Interferogramme können dann dazu verwendet werden, eine Drift der Systemuhren der SAR-Systeme zu ermitteln, die bei der weiteren Verarbeitung der Radarsignale berücksichtigt, insbesondere kompensiert werden kann. Dadurch wird ohne den Einsatz einer Inter-Satelliten-Verbindung eine Driftkompensation ermöglicht.

Die Erfindung betrifft nun konkret ein Verfahren zur interferometrischen Radarmessung mit mindestens zwei Synthetik-Apertur-Radar (SAR)-Systemen auf satelliten- und/oder flugkörpergestützten Plattformen, die einen gemeinsamen Oberflächenbereich mittels Mikrowellensignalen beleuchten, indem ein erstes SAR-System ein erstes Radarsignal auf einer ersten Sendefrequenz und mindestens ein zweites SAR-System mindestens ein zweites Radarsignal auf mindestens einer zweiten Sendefrequenz sendet. Dabei empfängt mindestens eines der mindestens zwei SAR-Systeme die auf dem gemeinsamen Oberflächenbereich reflektierten und interferierenden mindestens zwei Radarsignale, bestimmt aus den Interferogrammen Differenzphasen der empfangenen Radarsignale, ermittelt aus den Differenzphasen eine Drift einer Systemuhr der mindestens zwei SAR-Systeme und kompensiert die ermittelte Drift. Eine zusätzliche Verbindung zwischen den Plattformen zur Synchronisation der Systemuhren ist damit nicht mehr notwendig.

In einer bevorzugten Ausführungsform des Verfahrens empfängt das erste und das mindestens eine zweite SAR-System die auf dem gemeinsamen Oberflächenbereich reflektierten und interferierenden mindestens zwei Radarsignale der mindestens zwei SAR-Systeme, bestimmt aus den Interferogrammen Differenzphasen der empfangenen Radarsignale, ermittelt aus den Differenzphasen eine Drift einer Systemuhr der mindestens zwei SAR-Systeme und kompensiert die ermittelte Drift, vorzugsweise mit entsprechenden Maßnahmen zur Driftkompensation.

Insbesondere kann das Verfahren ein erstes Interferogramm aus dem von dem ersten SAR-System empfangenen ersten Radarsignal und dem von dem mindestens einen zweiten SAR-System empfangenen mindestens einen zweiten Radarsignal ableiten. Dieses Interferogramm hat gegenüber weiteren Interferogrammen eine doppelt wirksame Basislänge.

Ferner kann das Verfahren ein zweites Interferogramm aus dem von dem ersten SAR-System empfangenen ersten Radarsignal und dem von dem mindestens einen zweiten SAR-System empfangenen ersten Radarsignal ableiten. Dieses im Bereich der ersten Sendefrequenz abgeleitete Interferogramm enthält eine Differenzphase, die sich aus einem

# EP 1 637 902 B1

Phasenfehler des zweiten SAR-Systems abzüglich eines Phasenfehlers des ersten SAR-Systems ergibt.

Weiterhin kann das Verfahren ein drittes Interferogramm aus dem von dem ersten SAR-System empfangenen mindestens einen zweiten Radarsignal und dem von dem mindestens einen zweiten SAR-System empfangenen mindestens einen zweiten Radarsignal ableiten. Dieses im Bereich der zweiten Sendefrequenz abgeleitete Interferogramm enthält eine Differenzphase, die sich ebenfalls aus einem Phasenfehler des zweiten SAR-Systems abzüglich eines Phasenfehlers des ersten SAR-Systems ergibt.

Um eine Differenzphase zu ermitteln, die sich aus einem Phasenfehler des ersten SAR-Systems abzüglich eines Phasenfehlers des zweiten SAR-Systems ergibt, kann das Verfahren ein viertes Interferogramm aus dem von dem ersten SAR-System empfangenen ersten und mindestens einen zweiten Radarsignal ableiten. Dieses im Mikrowellenfrequenzbereich gekreuzte Interferogramm entsteht durch die Überlappung der Spektralbereiche des ersten und zweiten Radarsignals aufgrund einer Verschiebung des Spektrums der empfangenen Radarsignale.

Das Verfahren kann auch ein fünftes Interferogramm aus dem von dem mindestens einen zweiten SAR-System empfangenen ersten und mindestens einen zweiten Radarsignal ableiten, um eine Differenzphase zu ermitteln, die gleich ist der ermittelten Differenzphase beim vierten Interferogramm. Auch dieses Interferogramm entsteht durch eine Überlappung der Spektralbereiche des ersten und zweiten Radarsignals.

Die Erfindung betrifft ferner eine Vorrichtung zur interferometrischen Radarmessung mit mindestens zwei Synthetik-Apertur-Radar (SAR)-Systemen auf satelliten- und/oder flugkörpergestützten Plattformen, die einen gemeinsamen Oberflächenbereich mittels Mikrowellensignalen beleuchten, wobei ein erstes SAR-System ein erstes Radarsignal auf einer ersten Sendefrequenz und mindestens ein zweites SAR-System mindestens ein zweites Radarsignal auf mindestens einer zweiten Sendefrequenz senden kann. Dabei ist mindestens eines der mindestens zwei SAR-Systeme ausgebildet, um die auf dem gemeinsamen Oberflächenbereich reflektierten und interferierenden mindestens zwei Radarsignale zu empfangen, aus den Interferogrammen Differenzphasen der empfangenen Radarsignale zu bestimmen, aus den Differenzphasen eine Drift einer Systemuhr der mindestens zwei SAR-Systeme zu ermitteln und die ermittelte Drift zu kompensieren.

In einer bevorzugten Ausführungsform sind das erste und das mindestens zweite SAR-System ausgebildet, die auf dem gemeinsamen Oberflächenbereich reflektierten und interferierenden mindestens zwei Radarsignale der mindestens zwei SAR-Systeme zu empfangen, aus den Interferogrammen Differenzphasen der empfangenen Radarsignale zu bestimmen, aus den Differenzphasen eine Drift einer Systemuhr der mindestens zwei SAR-Systeme zu ermitteln und die ermittelte Drift zu kompensieren. Die Vorrichtung beinhaltet vorzugsweise Mittel zur Driftkompensation, die in Abhängigkeit von der ermittelten Drift aktiviert werden.

Insbesondere weist das erste SAR-System einen steileren Einfallswinkel zum beleuchteten Oberflächenbereich auf als das mindestens eine zweite SAR-System.

In diesem Fall sollte die erste Sendefrequenz höher als die mindestens eine zweite Sendefrequenz sein. Um eine hohe Auflösung quer zur Flugrichtung der Satelliten zu erhalten, wird dem SAR-System mit dem steileren Einfallswinkel eine höhere Sendefrequenz zugeordnet als dem SAR-System mit dem flacheren Einfallswinkel.

Weiterhin kann die Vorrichtung derart ausgebildet sein, dass das erste und das mindestens eine zweite SAR-System Radarsignale auf jeweils mehr als einer Sendefrequenz senden. Der unterschiedliche und sich teilweise ergänzende Informationsgehalt der Radarbilddaten, die in verschiedenen Frequenzbereichen aufgenommen werden, führt zu einer Verbesserung der Interpretation dieser Radarbilddaten.

Außerdem kann die Vorrichtung derart ausgebildet sein, dass das erste und das mindestens eine zweite SAR-System Radarsignale mit mehr als einer Polarisation senden. Wie auch die Verwendung mehrerer Frequenzen ermöglicht die Verwendung unterschiedlicher Polarisationen einen höheren Informationsgewinn bei der Interpretation der Radarbilder.

Insbesondere können das erste und das mindestens eine zweite Radarsignal frequenzmodulierte Dauersignale sein.

Weiterhin können das erste und das mindestens eine zweite Radarsignal frequenzmodulierte Impulse sein. Bei der Verwendung von frequenzmodulierten Impulsen können aus der Laufzeit des Impulses, der Neigung der Impulsflanken und der Energie der Impulsantwort beispielsweise Daten über die Entfernung oder die Streuung des Radarsignals, die wiederum Erkenntnisse über die Oberflächenbeschaffenheit zulässt, gewonnen werden.

Die Vorrichtung kann außerdem ausgebildet sein, um das erste und das mindestens eine zweite Radarsignal innerhalb eines Impulsintervalls zeitlich versetzt zu senden. Da die Verarbeitung der Radarbilddaten sehr rechenintensiv ist, kann die Versetzung der Radarsignale zu einer Reduzierung der Bildauflösung und damit zu einer Reduzierung der Datenrate führen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:

Fig. 1    eine Ausführungsform der Vorrichtung gemäß der Erfindung mit zwei SAR-Systemen auf einer satellitengestützten Plattform;

Fig. 2    ein Spektraldiagramm der empfangenen Radarsignale im Mikrowellenfrequenzbereich mit einer Darstellung ihrer Position entlang einer geometrischen Basislinie; und

Fig. 3    ein Spektraldiagramm der empfangenen Radarsignale mit ihrer Lageverschiebung aufgrund der Reflektion am beleuchteten Oberflächenbereich und den daraus resultierenden überlappenden Spektralbereichen zur Bildung der Interferogramme.

Im folgenden können gleiche und/oder funktional gleiche Elemente mit den gleichen Bezugszeichen versehen sein.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

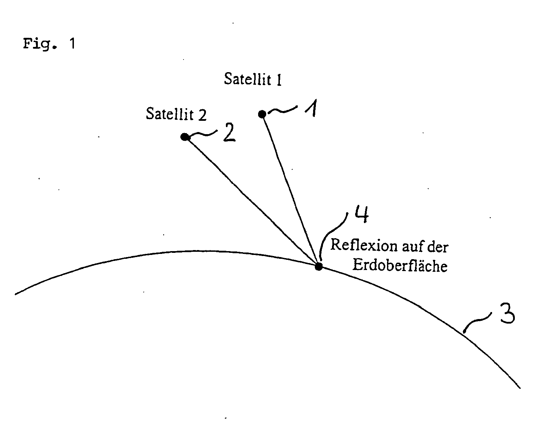

Fig. 1 zeigt eine Ausführungsform der Vorrichtung gemäß der Erfindung mit zwei SAR-Systemen 1 und 2 auf einer satellitengestützten Plattform. Beide SAR-Systeme 1 und 2 beleuchten einen Oberflächenbereich 4 der Erdoberfläche 3. Der erste Satellit mit dem ersten SAR-System 1 steht dabei mit einem steileren Einfallswinkel über dem beleuchteten Oberflächenbereich 4 als der zweite Satellit mit dem zweiten SAR-System 2. Das erste SAR-System 1 sendet mit einer ersten Sendefrequenz $f_1$, das zweite SAR-System 2 mit einer zweiten Sendefrequenz $f_2$, die niedriger als die erste Sendefrequenz $f_1$ ist. Um eine hohe Auflösung quer zur Flugrichtung der Satelliten zu erhalten, wird dem SAR-System mit dem steileren Einfallswinkel eine höhere Sendefrequenz zugeordnet als dem SAR-System mit dem flacheren Einfallswinkel.

Die reflektierten Radarsignale des ersten und des zweiten SAR-Systems werden jeweils von beiden SAR-Systemen empfangen, wobei die gesendeten Radarsignale sowohl frequenzmodulierte Impulse als auch frequenzmodulierte Dauersignale sein können. Bei der Verwendung von frequenzmodulierten Impulsen können beispielsweise aus der Laufzeit des Impulses, der Neigung der Impulsflanken und der Energie der Impulsantwort unter anderem Daten über die Entfernung oder die Streuung des Radarsignals, die wiederum Erkenntnisse über die Oberflächenbeschaffenheit zulässt, gewonnen werden.

Es ist außerdem möglich, dass das erste und zweite SAR-System 1 und 2 Radarsignale auf jeweils mehr als einer Sendefrequenz senden. Einfallende Radarsignale werden je nach Frequenz unterschiedlich von der Oberfläche reflektiert. Verschiedene Frequenzbänder zeigen verschiedene Rückstreucharakteristika in Abhängigkeit von der Oberflächenbeschaffenheit. Die Intensität des rückgestreuten Signals ist unter anderem stark abhängig von der Oberflächenneigung bzw. dem Einfallswinkel des Radarsignals.

Der unterschiedliche und sich teilweise ergänzende Informationsgehalt der Radarbilddaten, die in verschiedenen Frequenzbereichen aufgenommen werden, führt zu einer Verbesserung der Interpretation dieser Radarbilddaten. Ebenso ermöglicht die Verwendung unterschiedlicher Polarisationen einen höheren Informationsgewinn bei der Interpretation der Radarbilder.

Da die Verarbeitung der Radarbilddaten sehr rechenintensiv ist, kann das zeitversetzte Senden der Radarsignale innerhalb eines Impulsintervalls zu einer Reduzierung der Bildauflösung und damit zu einer Reduzierung der Datenrate verwendet werden.

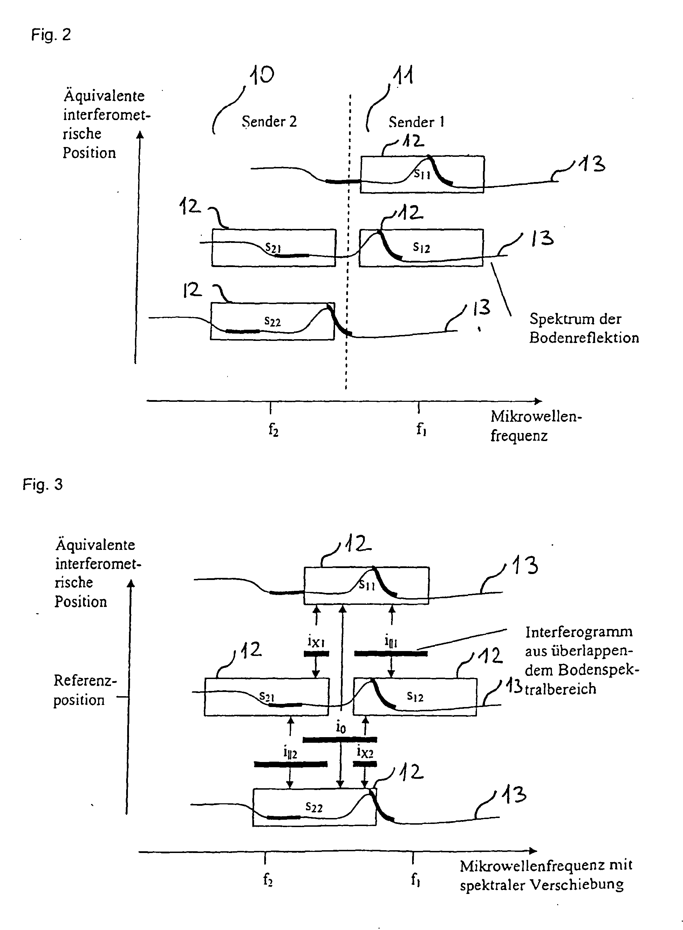

Fig. 2 zeigt ein Spektraldiagramm der empfangenen Radarsignale im Mikrowellenfrequenzbereich mit einer Darstellung ihrer Position entlang einer geometrischen Basislinie. $s_{11}$ bezeichnet dabei ein vom ersten SAR-System gesendetes und empfangenes Radarsignal, $s_{12}$ ein vom ersten SAR-System gesendetes und vom zweiten SAR-System empfangenes Radarsignal. Analog dazu ist $s_{21}$ ein vom zweiten SAR-System gesendetes und vom ersten SAR-System empfangenes Radarsignal und $s_{22}$ ein vom zweiten SAR-System gesendetes und empfangenes Radarsignal. Weiterhin sei $\delta_1$ der auf einer Drift der Systemuhren beruhende Phasenfehler im gesendeten Signal des ersten SAR-Systems, $-\delta_1$ im empfangenen Signal des ersten SAR-Systems. Analog dazu ist $\delta_2$ der auf einer Drift der Systemuhren beruhende Phasenfehler des gesendeten Signals des zweiten SAR-Systems, $-\delta_2$ im empfangenen Signal des zweiten SAR-Systems.

Damit enthalten die empfangenen Signale folgenden Phasenfehler:

$s_{11}$, $s_{11}^*$, $s_{22}$ und $s_{22}^*$        0
$s_{12}$ und $s_{21}^*$                $\delta_1 - \delta_2$
$s_{21}$ und $s_{12}^*$                $\delta_2 - \delta_1$

Das Spektraldiagramm zeigt die Spektrallinien der verschiedenen an der Oberfläche reflektierten Radarsignale 13. Das erste SAR-System empfängt die Signale $s_{11}$ und $s_{12}$ mit einer Signalbandbreite 12 im Frequenzbereich 11. Analog dazu empfängt das zweite SAR-System die Signale $s_{21}$ und $s_{22}$ mit der Signalbandbreite 12 im Frequenzbereich 10.

Wie in Fig. 3 gezeigt, lassen sich aus den vier empfangenen Radarsignalen $s_{11}$, $s_{12}$, $s_{21}$ und $s_{22}$ fünf Interferogramme bilden. Die Interferogramme werden über das Produkt eines ersten der vier empfangenen Radarsignale $s_{11}$, $s_{12}$, $s_{21}$ und $s_{22}$ mit einem anderen komplex konjugierten der vier empfangenen Radarsignale $s_{11}^*$, $s_{12}^*$, $s_{21}^*$ und $s_{22}^*$ gebildet.

Die um $f_1$ und $f_2$ abgeleiteten Interferogramme (jeweils gleicher Sender)

$$i_{\|1} = s_{11}\ s_{12}^*$$

und

$$i_{\|2} = s_{21}\ s_{22}^*$$

enthalten jeweils den gleichen differenziellen Phasenfehler $\delta_2 - \delta_1$, der auf der Drift zwischen den Systemen beruht. Diese Messung entspricht einer Verdopplung eines einfachen bistatischen SAR-Radarsystems, bei dem Sender und Empfänger getrennt sind, ohne Driftkompensation, aber mit vervielfachter Signalstärke.

Durch die Verschiebung des Spektrums der reflektierten Radarsignale entsteht eine Überlappung der Spektralbereiche, die eine Bildung von im Mikrowellenbereich gekreuzten Interferogrammen $i_{X1}$ und $i_{X2}$ innerhalb dieser überlappenden Bereiche ermöglicht. Dabei interferieren die Radarsignale um $f_1$ kohärent mit Radarsignalen um $f_2$ in:

$i_0 = s_{11}\ s_{22}^*$ mit gegenüber den anderen Interferogrammen verdoppelter wirksamer Basislänge, und
$i_{X1} = s_{11}\ s_{21}^*$ und
$i_{X2} = s_{12}\ s_{22}^*$ mit gleichen differenziellen Phasenfehlern $\delta_2 - \delta_1$, die aber verglichen mit $i_{\|1}$ und $i_{\|2}$ ein umgekehrtes Vorzeichen besitzen.

Diese Interferogramme werden zur Messung und Kompensation des differenziellen Phasenfehlers verwendet. Die der Geometrie zugehörigen Signalanteile wie beispielsweise Höheninformationen bei topografischen Messungen werden aus den Differenzen zwischen diesen Interferogrammen ausgeblendet. Damit bleiben folgende Phasenfehler übrig:

$$i_{\|1}\ i_{X2}\ ;\ i_{\|2}\ i_{X1} \qquad 2\,(\delta_2 - \delta_1)$$

$$i_{\|1}\ i_{\|2}\ i_0^* \qquad 2\,(\delta_2 - \delta_1)$$

Es genügt, wenn mindestens eines der gekreuzten Interferogramme $i_{X1}$ oder $i_{X2}$ in reduzierter Schrägentfernungsauflösung (in geringer Spektralbreite) vorliegt, da die Bestimmung des differenziellen Phasenfehlers in niedriger Ordnung unabhängig von der Schrägentfernung (z. B. konstant innerhalb eines Pulses bzw. einer Modulationsperiode) ist. Sollen so beispielsweise die differenziellen Phasendriften zwischen SAR-Systemen kompensiert werden, lassen sich die ermittelten differenziellen Phasenfehler durch Mittelung der Interferogramme in Schrägentfernungsrichtung für unterschiedliche Positionen in Flugrichtung ermitteln. Bei zeitlich schnell variierenden Phasenfehlern muss die synthetische Apertur entsprechend verkürzt werden oder die auftretende Verschiebung der Bilddaten entlang der Flugrichtung aufgrund der unterschiedlichen Phasen der geometrisch, aber nicht zeitlich übereinanderliegenden SAR-Aufnahmen erfasst werden. Bei Impulsraten im Bereich von 5 kHz werden Phasendriftmessungen mit einer Rate von bis zu 500 Hz erwartet.

Die Verschiebung des Bodenspektrums aufgrund der interferometrischen Messanordnung erlaubt die Berechnung eines Interferogramms zwischen den beiden Mikrowellenfrequenzbereichen ebenfalls bei einer Anordnung, in der nur ein Empfänger verwendet wird. Eine Phasenfehlerkompensation wie bei einer Mehrempfängeranordnung ist jedoch hier nicht möglich. So kann beispielsweise bei einer Verwendung des ersten SAR-Systems als Empfänger ein gekreuztes Interferogramm

$$i_{X1} = s_{11} \; s_{21}{}^{*}$$

ermittelt werden. Diese Betriebsart ist auch in Kombination mit der Mehrempfängervariante möglich, wobei die zeitlichen Empfangsfenster der beteiligten Empfänger, beispielsweise mit kleiner Überlappung, verschoben zueinander liegen, um erweiterte Oberflächenbreiten erfassen zu können oder um niedrigere Datenmengen erfassen zu müssen.

**Bezugszeichen**

| | |
|---|---|
| 1 | erstes SAR-System auf einem ersten Satelliten |
| 2 | zweites SAR-System auf einem zweiten Satelliten |
| 3 | Erdoberfläche |
| 4 | beleuchteter Oberflächenbereich |
| $f_1$ | erste Sendefrequenz des ersten SAR-Systems |
| $f_2$ | zweite Sendefrequenz des zweiten SAR-Systems |
| 10 | Sendebereich des ersten SAR-Systems |
| 11 | Sendebereich des zweiten SAR-Systems |
| 12 | Bandbreite der empfangenen Radarsignale |
| 13 | Spektrum der an der beleuchteten Oberfläche reflektierten Radarsignale |
| $s_{11}$ | vom ersten SAR-System gesendetes und empfangenes Radarsignal |
| $s_{12}$ | vom ersten SAR-System gesendetes und vom zweiten SAR-System empfangenes Radarsignal |
| $s_{21}$ | vom zweiten SAR-System gesendetes und vom ersten SAR-System empfangenes Radarsignal |
| $s_{22}$ | vom zweiten SAR-System gesendetes und empfangenes Radarsignal |
| $\delta_1$ | der auf einer Drift der Systemuhren beruhende Phasenfehler des ersten SAR-Systems |
| $\delta_2$ | der auf einer Drift der Systemuhren beruhende Phasenfehler des zweiten SAR-Systems |
| $i_0$ | erstes Interferogramm aus den überlappenden Spektralbereichen der Radarsignale $s_{11}$ und $s_{22}$ |
| $i_{\|1}$ | zweites Interferogramm aus den überlappenden Spektralbereichen der Radarsignale $s_{11}$ und $s_{12}$ |
| $i_{\|2}$ | drittes Interferogramm aus den überlappenden Spektralbereichen der Radarsignale $s_{21}$ und $s_{22}$ |
| $i_{X1}$ | viertes Interferogramm aus den überlappenden Spektralbereichen der Radarsignale $s_{11}$ und $s_{21}$ |
| $i_{X2}$ | fünftes Interferogramm aus den überlappenden Spektralbereichen der Radarsignale $s_{12}$ und $s_{22}$ |

**Patentansprüche**

1. Verfahren zur interferometrischen Radarmessung mit mindestens zwei Synthetik-Apertur-Radar (SAR)-Systemen (1; 2) auf satelliten- und/oder flugkörpergestützten Plattformen, die einen gemeinsamen Oberflächenbereich mittels Mikrowellensignalen beleuchten, indem ein erstes SAR-System (1) ein erstes Radarsignal auf einer ersten Sende-frequenz ($f_1$)und mindestens ein zweites SAR-System (2) mindestens ein zweites Radarsignal auf mindestens einer zweiten Sendefrequenz ($f_2$) sendet,
**dadurch gekennzeichnet, dass**
mindestens eines der mindestens zwei SAR-Systeme (1; 2) die auf dem gemeinsamen Oberflächenbereich reflektierten und interferierenden mindestens zwei Radarsignale empfängt, aus den Interferogrammen ($i_{\|1}$, $i_{\|2}$, $i_{X1}$, $i_{X2}$; $i_0$) Differenzphasen der empfangenen Radarsignale ($s_{11}$, $s_{12}$, $s_{21}$ und $s_{22}$) bestimmt, aus den Differenzphasen eine Drift einer Systemuhr der mindestens zwei SAR-Systeme ermittelt und die ermittelte Drift kompensiert.

2. Verfahren gemäß Anspruch 1
**dadurch gekennzeichnet, dass**
das erste und das mindestens eine zweite SAR-System (1; 2) die auf dem gemeinsamen Oberflächenbereich reflektierten und interferierenden mindestens zwei Radarsignale empfängt, aus den Interferogrammen ($i_{\|1}$, $i_{\|2}$, $i_{X1}$, $i_{X2}$; $i_0$) Differenzphasen der empfangenen Radarsignale ($s_{11}$, $s_{12}$, $s_{21}$ und $s_{22}$) bestimmt, aus den Differenzphasen eine Drift einer Systemuhr der mindestens zwei SAR-Systeme ermittelt und die ermittelte Drift kompensiert.

3. Verfahren gemäß Anspruch 2
**dadurch gekennzeichnet, dass**
ein erstes Interferogramm ($i_0$) aus dem von dem ersten SAR-System empfangenen ersten Radarsignal ($s_{11}$) und

dem von dem mindestens einen zweiten SAR-System empfangenen mindestens einen zweiten Radarsignal ($s_{22}$) abgeleitet wird.

4. Verfahren gemäß Anspruch 2 oder 3
**dadurch gekennzeichnet, dass**
ein zweites Interferogramm ($i_{||1}$) aus dem von dem ersten SAR-System empfangenen ersten Radarsignal ($s_{11}$) und dem von dem mindestens einen zweiten SAR-System empfangenen ersten Radarsignal ($s_{12}$) abgeleitet wird.

5. Verfahren gemäß einem der Ansprüche 2 bis 4
**dadurch gekennzeichnet, dass**
ein drittes Interferogramm ($i_{||2}$) aus dem von dem ersten SAR-System empfangenen mindestens einen zweiten Radarsignal ($s_{21}$) und dem von dem mindestens einen zweiten SAR-System empfangenen mindestens einen zweiten Radarsignal ($s_{22}$) abgeleitet wird.

6. Verfahren gemäß einem der vorhergehenden Ansprüche
**dadurch gekennzeichnet, dass**
ein viertes Interferogramm ($i_{X1}$) aus dem von dem ersten SAR-System empfangenen ersten ($s_{11}$) und mindestens einen zweiten Radarsignal ($s_{21}$) abgeleitet wird.

7. Verfahren gemäß einem der vorhergehenden Ansprüche
**dadurch gekennzeichnet, dass**
ein fünftes Interferogramm ($i_{X2}$) aus dem von dem mindestens einen zweiten SAR-System empfangenen ersten ($s_{12}$) und mindestens einen zweiten Radarsignal ($s_{22}$) abgeleitet wird.

8. Vorrichtung zur interferometrischen Radarmessung mit mindestens zwei Synthetik-Apertur-Radar (SAR)-Systemen (1;2) auf satelliten- und/oder flugkörpergestützten Plattformen, die einen gemeinsamen Oberflächenbereich mittels Mikrowellensignalen beleuchten, wobei ein erstes SAR-System (1) ein erstes Radarsignal auf einer ersten Sendefrequenz ($f_1$) und mindestens ein zweites SAR-System (2) mindestens ein zweites Radarsignal auf mindestens einer zweiten Sendefrequenz ($f_2$) senden kann,
**dadurch gekennzeichnet, dass**
mindestens eines der mindestens zwei SAR-Systeme (1; 2) ausgebildet ist, um die auf dem gemeinsamen Oberflächenbereich reflektierten und interferierenden mindestens zwei Radarsignale zu empfangen, aus den Interferogrammen ($i_{||1}$, $i_{||2}$, $i_{X1}$, $i_{X2}$; $i_0$) Differenzphasen der empfangenen Radarsignale ($s_{11}$, $s_{12}$, $s_{21}$ und $s_{22}$) zu bestimmen, aus den Differenzphasen eine Drift einer Systemuhr der mindestens zwei SAR-Systeme zu ermitteln und die ermittelte Drift zu kompensieren.

9. Vorrichtung gemäß Anspruch 8
**dadurch gekennzeichnet, dass**
das erste und das mindestens zweite SAR-System (1; 2) ausgebildet sind, die auf dem gemeinsamen Oberflächenbereich reflektierten und interferierenden mindestens zwei Radarsignale der mindestens zwei SAR-Systeme zu empfangen, aus den Interferogrammen ($i_{||1}$, $i_{||2}$, $i_{X1}$, $i_{X2}$; $i_0$) Differenzphasen der empfangenen Radarsignale ($s_{11}$, $s_{12}$, $s_{21}$ und $S_{22}$) zu bestimmen, aus den Differenzphasen eine Drift einer Systemuhr der mindestens zwei SAR-Systeme zu ermitteln und die ermittelte Drift zu kompensieren.

10. Vorrichtung gemäß Anspruch 8 oder 9
**dadurch gekennzeichnet, dass**
das erste SAR-System einen steileren Einfallswinkel zum beleuchteten Oberflächenbereich aufweist als das mindestens eine zweite SAR-System.

11. Vorrichtung gemäß Anspruch 10
**dadurch gekennzeichnet, dass**
die erste Sendefrequenz ($f_1$) höher ist als die mindestens eine zweite Sendefrequenz ($f_2$).

12. Vorrichtung gemäß einem der Ansprüche 8 bis 11
**dadurch gekennzeichnet, dass**
das erste und das mindestens eine zweite SAR-System Radarsignale auf jeweils mehr als einer Sendefrequenz senden.

**13.** Vorrichtung gemäß einem der Ansprüche 8 bis 12
**dadurch gekennzeichnet, dass**
das erste und das mindestens eine zweite SAR-System Radarsignale mit mehr als einer Polarisation senden.

**14.** Vorrichtung gemäß einem der Ansprüche 8 bis 13
**dadurch gekennzeichnet, dass**
das erste und das mindestens eine zweite Radarsignal frequenzmodulierte Dauersignale sind.

**15.** Vorrichtung gemäß einem der Ansprüche 8 bis 13
**dadurch gekennzeichnet, dass**
das erste und das mindestens eine zweite Radarsignal frequenzmodulierte Impulse sind.

**16.** Vorrichtung gemäß Anspruch 13
**dadurch gekennzeichnet, dass**
sie ausgebildet ist, um das erste und das mindestens eine zweite Radarsignal innerhalb eines Impulsintervalls zeitlich versetzt zu senden.

**Claims**

**1.** A method for interferometric radar measurement with at least two synthetic aperture radar (SAR) systems (1; 2) on satellite- and/or aircraft-supported platforms, which illuminate a common surface region by means of microwave signals, in that a first SAR system (1) transmits a first radar signal at a first transmission frequency ($f_1$) and at least one second SAR system (2) transmits at least one second radar signal at least at one second transmission frequency ($f_2$),
**characterised in that**
at least one of the at least two SAR systems (1; 2) receives the at least two interfering radar signals reflected by the common surface region, determines difference phases of the received radar signals ($s_{11}$, $s_{12}$, $s_{21}$ and $s_{22}$) from the interferograms ($i_{\|1}$, $i_{\|2}$, $i_{X1}$, $i_{X2}$; $i_0$), ascertains a drift of a system clock of the at least two SAR systems from the difference phases and compensates for the ascertained drift.

**2.** A method according to Claim 1,
**characterised in that**
the first and the at least one second SAR systems (1; 2) receive the at least two interfering radar signals reflected by the common surface region, determine difference phases of the received radar signals ($s_{11}$, $s_{12}$, $s_{21}$ and $s_{22}$) from the interferograms ($i_{\|1}$, $i_{\|2}$, $i_{X1}$, $i_{X2}$; $i_0$), ascertain a drift of a system clock of the at least two SAR systems from the difference phases and compensate for the ascertained drift.

**3.** A method according to Claim 2,
**characterised in that**
a first interferogram ($i_0$) is derived from the first radar signal ($s_{11}$) received by the first SAR system and the at least one second radar signal ($s_{22}$) received by the at least one second SAR system.

**4.** A method according to Claim 2 or 3,
**characterised in that**
a second interferogram ($i_{\|1}$) is derived from the first radar signal ($s_{11}$) received by the first SAR system and the first radar signal ($s_{12}$) received by the at least one second SAR system.

**5.** A method according to one of Claims 2 to 4,
**characterised in that**
a third interferogram ($i_{\|2}$) is derived from the at least one second radar signal ($s_{21}$) received by the first SAR system and the at least one second radar signal ($s_{22}$) received by the at least one second SAR system.

**6.** A method according to one of the preceding claims,
**characterised in that**
a fourth interferogram ($i_{X1}$) is derived from the first ($s_{11}$) and at least one second radar signal ($s_{21}$) received by the first SAR system.

**7.** A method according to one of the preceding claims,
**characterised in that**
a fifth interferogram ($i_{X2}$) is derived from the first ($s_{12}$) and at least one second radar signal ($s_{22}$) received by the at least one second SAR system.

**8.** A device for interferometric radar measurement with at least two synthetic aperture radar (SAR) systems (1; 2) on satellite- and/or aircraft-supported platforms, which illuminate a common surface region by means of microwave signals, in which a first SAR system (1) can transmit a first radar signal at a first transmission frequency ($f_1$) and at least one second SAR system can transmit at least one second radar signal at least at one second transmission frequency ($f_2$),
**characterised in that**
at least one of the at least two SAR systems (1; 2) is designed to receive the at least two interfering radar signals reflected by the common surface region, determine difference phases of the received radar signals ($s_{11}$, $s_{12}$, $s_{21}$ and $s_{22}$) from the interferograms ($i_{\parallel 1}$, $i_{\parallel 2}$, $i_{X1}$, $i_{X2}$; $i_0$), ascertain a drift of a system clock of the at least two SAR systems from the difference phases and compensate for the ascertained drift.

**9.** A device according to Claim 8,
**characterised in that**
the first and the at least second SAR systems (1; 2) are designed to receive the at least two interfering radar signals reflected by the common surface region, determine difference phases of the received radar signals ($s_{11}$, $s_{12}$, $s_{21}$ and $s_{22}$) from the interferograms ($i_{\parallel 1}$, $i_{\parallel 2}$, $i_{X1}$, $i_{X2}$; $i_0$), ascertain a drift of a system clock of the at least two SAR systems from the difference phases and compensate for the ascertained drift.

**10.** A device according to Claim 8 or 9,
**characterised in that**
the first SAR system has a steeper angle of incidence to the illuminated surface region than the at least one second SAR system.

**11.** A device according to Claim 10,
**characterised in that**
the first transmission frequency ($f_1$) is higher than the at least one second transmission frequency ($f_2$).

**12.** A device according to one of Claims 8 to 11,
**characterised in that**
the first and the at least one second SAR system transmit radar signals respectively on more than one transmission frequency.

**13.** A device according to one of Claims 8 to 12,
**characterised in that**
the first and the at least one second SAR system transmit radar signals with more than one polarisation.

**14.** A device according to one of Claims 8 to 13,
**characterised in that**
the first and the at least one second radar signal are frequency-modulated continuous wave signals.

**15.** A device according to one of Claims 8 to 13,
**characterised in that**
the first and the at least one second radar signal are frequency-modulated pulses.

**16.** A device according to Claim 13,
**characterised in that**
it is designed in order to transmit the first and the at least one second radar signal so that they are temporally offset within a pulse interval.

**Revendications**

**1.** Procédé de mesure radar interférométrique comprenant au moins deux systèmes radar à synthèse d'ouverture (SAR) (1 ; 2) sur des plates-formes satellites et/ou missiles qui éclairent une zone de surface commune au moyen de signaux à micro-ondes, dont un premier système SAR (1) envoie un premier signal radar sur une première fréquence d'émission ($f_1$) et au moins un deuxième système SAR (2) envoie au moins un deuxième signal radar sur au moins une deuxième fréquence d'émission ($f_2$),

**caractérisé en ce qu'**

au moins l'un des au moins deux systèmes SAR (1 ; 2) reçoit les au moins deux signaux radar interférents et réfléchis sur la zone de surface commune, détermine à partir des interférogrammes ($i_{\parallel 1}$, $i_{\parallel 2}$, $i_{X1}$, $i_{X2}$ ; $i_0$) des différences de phase entre les signaux radar reçus ($s_{11}$, $s_{12}$, $s_{21}$ et $s_{22}$), détermine à partir des différences de phase une dérive d'une horloge système des au moins deux systèmes SAR et compense la dérive déterminée.

2. Procédé selon la revendication 1,
   **caractérisé en ce que**
   le premier et l'au moins un deuxième système SAR (1 ; 2) reçoit les au moins deux signaux radar interférents et réfléchis sur la zone de surface commune, détermine à partir des interférogrammes ($i_{\parallel 1}$, $i_{\parallel 2}$, $i_{X1}$, $i_{X2}$ ; $i_0$) des différences de phase entre les signaux radar reçus ($s_{11}$, $s_{12}$, $s_{21}$ et $s_{22}$), détermine à partir des différences de phase une dérive d'une horloge système des au moins deux systèmes SAR et compense la dérive déterminée.

3. Procédé selon la revendication 2,
   **caractérisé en ce qu'**
   un premier interférogramme ($i_0$) est dérivé du premier signal radar ($s_{11}$) reçu par le premier système SAR et de l'au moins un deuxième signal radar ($s_{22}$) reçu par l'au moins un deuxième système SAR.

4. Procédé selon la revendication 2 ou 3,
   **caractérisé en ce qu'**
   un deuxième interférogramme ($i_{\parallel 1}$) est dérivé du premier signal radar ($s_{11}$) reçu par le premier système SAR et du premier signal radar ($s_{12}$) reçu par l'au moins un deuxième système SAR.

5. Procédé selon l'une des revendications 2 à 4,
   **caractérisé en ce qu'**
   un troisième interférogramme ($i_{\parallel 2}$) est dérivé de l'au moins un deuxième signal radar ($s_{21}$) reçu par le premier système SAR et de l'au moins un deuxième signal radar ($s_{22}$) reçu par l'au moins un deuxième système SAR.

6. Procédé selon l'une des revendications précédentes,
   **caractérisé en ce qu'**
   un quatrième interférogramme ($i_{X1}$) est dérivé du premier ($s_{11}$) et de l'au moins un deuxième signal radar ($s_{21}$), reçus par le premier système SAR.

7. Procédé selon l'une des revendications précédentes,
   **caractérisé en ce qu'**
   un cinquième interférogramme ($i_{X2}$) est dérivé du premier ($s_{12}$) et de l'au moins un deuxième signal radar ($s_{22}$), reçus par l'au moins un deuxième système SAR.

8. Dispositif de mesure radar interférométrique comprenant au moins deux systèmes radar à synthèse d'ouverture (SAR) (1 ; 2) sur des plates-formes satellites et/ou missiles, qui éclairent une zone de surface commune au moyen de signaux à micro-ondes, un premier système SAR (1) pouvant envoyer un premier signal radar sur une première fréquence d'émission ($f_1$) et au moins un deuxième système SAR (2) pouvant envoyer au moins un deuxième signal radar sur au moins une deuxième fréquence d'émission ($f_2$),
   **caractérisé en ce qu'**
   au moins l'un des au moins deux systèmes SAR (1 ; 2) est configuré pour recevoir les au moins deux signaux radar interférents et réfléchis sur la zone de surface commune, pour déterminer à partir des interférogrammes ($i_{\parallel 1}$, $i_{\parallel 2}$, $i_{X1}$, $i_{X2}$; $i_0$) des différences de phase entre les signaux radar reçus ($s_{11}$, $s_{12}$, $s_{21}$ et $s_{22}$), pour déterminer à partir des différences de phase une dérive d'une horloge système des au moins deux systèmes SAR et pour compenser la dérive déterminée.

9. Dispositif selon la revendication 8
   **caractérisé en ce que**
   le premier et l'au moins un deuxième système SAR (1 ; 2) sont configurés pour recevoir les au moins deux signaux radar interférents et réfléchis sur la zone de surface commune, pour déterminer à partir des interférogrammes ($i_{\parallel 1}$,

$i_{\|2}$, $i_{X1}$, $i_{X2}$ ; $i_0$) des différences de phase entre les signaux radar reçus ($s_{11}$, $s_{12}$, $s_{21}$ et $s_{22}$), pour déterminer à partir des différences de phase une dérive d'une horloge système des au moins deux systèmes SAR et pour compenser la dérive déterminée.

**10.** Dispositif selon la revendication 8 ou 9,
**caractérisé en ce que**
le premier système SAR présente un angle d'incidence plus raide pour l'éclairage de la zone de surface que l'au moins un deuxième système SAR.

**11.** Dispositif selon la revendication 10,
**caractérisé en ce que**
la première fréquence d'émission ($f_1$) est plus élevée que l'au moins une deuxième fréquence d'émission ($f_2$).

**12.** Dispositif selon l'une des revendications 8 à 11,
**caractérisé en ce que**
le premier et l'au moins un deuxième système SAR envoient des signaux radar sur respectivement plus d'une fréquence d'émission.

**13.** Dispositif selon l'une des revendications 8 à 12,
**caractérisé en ce que**
le premier et l'au moins un deuxième système SAR envoient des signaux radar avec plus d'une polarisation.

**14.** Dispositif selon l'une des revendications 8 à 13,
**caractérisé en ce que**
le premier et l'au moins un deuxième signal radar sont des signaux de durée modulés en fréquence.

**15.** Dispositif selon l'une des revendications 8 à 13,
**caractérisé en ce que**
le premier et l'au moins un deuxième signal radar sont des impulsions modulées en fréquence.

**16.** Dispositif selon la revendication 13,
**caractérisé en ce qu'**
il est configuré pour envoyer le premier et l'au moins un deuxième signal radar de manière temporellement décalée à l'intérieur d'un intervalle d'impulsion.

Fig. 1

Satellit 1

Satellit 2

2

1

4

Reflexion auf der
Erdoberfläche

3

Fig. 2

Äquivalente
interferometrische
Position

10

Sender 2

11

Sender 1

12

S₁₁

13

12

S₂₁

12

S₁₂

13

12

S₂₂

13

Spektrum der
Bodenreflektion

f₂          f₁          Mikrowellenfrequenz

Fig. 3

Äquivalente
interferometrische
Position

12

S₁₁

13

Referenzposition

i_x1     i_ll1

Interferogramm
aus überlappendem Bodenspektralbereich

12

S₂₁

12

S₁₂

13

i₀

i_ll2    i_x2

12

S₂₂

13

f₂          f₁          Mikrowellenfrequenz mit
spektraler Verschiebung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1426785 A
- EP 1065518 A